# EUROPEAN PATENT SPECIFICATION

(11) **EP 4 643 101 B1**
(45) Date of publication and mention of the grant of the patent: **10.12.2025**
(21) Application number: 24783341.1
(22) Date of filing: 04.07.2024
(51) Int. Cl.: G01F 11/02, G01F 13/00, G01F 15/061, G01F 15/06, G01F 15/075, G01F 19/00, A23G 9/28, A47J 43/28

(54) **PORTION COUNTING SYSTEM AND METHOD**
SYSTEM UND VERFAHREN ZUM ZÄHLEN VON PORTIONEN
SYSTÈME ET PROCÉDÉ DE COMPTAGE DE PORTIONS

(30) Priority: 28.12.2023 HU 2400007
(43) Date of publication of application: 05.11.2025
(73) Proprietor: Szabó, Ervin, 8553 Lovászpatona (HU)
(72) Inventor: Szabó, Ervin, 8553 Lovászpatona (HU)
(74) Representative: Kereszty, Marcell
(86) International application number: PCT/HU2024/050053
(87) International publication number: WO 2025/141292

(56) References cited:
- EP-B1- 0 599 904
- DE-A1- 102011 080 246
- DE-A1- 4 138 710
- KR-A- 20210 015 444
- US-A1- 2013 241 743
- US-A1- 2017 150 841
- US-B1- 6 850 861

## Description

### TECHNICAL FIELD

The invention relates to a portion counting system and a method for counting dispensed portions of a foodstuff with a creamy consistency. The invention may be especially preferably applied for the purposes of portion counting of ice cream selling. In that case, the invention can be realised as a system consisting of an electronic device attached to or made integral with an ice dispensing scoop and a central data collection unit in data connection with one or more such dispensing scoops, and as a method for operating the system. The system and method according to the invention make it possible to count the dispensed scoops and to transfer this information to the appropriate persons.

### BACKGROUND ART

The prior art does not include any solutions for effectively collecting accurate and reliable data on the real number of scoops sold during vending ice cream or other foodstuff with a creamy consistency, i.e., only the weight of the product shipped to the ice cream counter is known but the transactions are based on the number of scoops. Because a wide variety of ice cream types with different specific weight can be on sale at the same time, the actual sales figures cannot be determined on the basis of weight alone. There is a need for a solution that would make it possible to accurately count the dispensed scoops independent of the sales staff, and to convey this information to the appropriate person, for example the owner of the business.

Theoretically, the problem could be solved by processing footage recorded by a surveillance camera watching the ice cream counter applying an artificial intelligence algorithm running on a high-performance computer, and thereby determining - with increasing accuracy due to the increasing number of samples - the number of scoops sold. However, this technical solution would provide an excessively costly device that would never recover its costs.

DE 41 38 710 A1, DE 8711544 U1, EP 0599904 B1, US 5,044,914 and US 2005/000372 A1 disclose simple solutions for counting scoops, while a kitchen utensil with sensors is disclosed in US 2017/0150841 A1. For example, the technical solution disclosed in US 2005/000372 A1 comprises a portion counter system for counting scoops, i.e., ice cream portions, which comprises a scoop having a hollow scooping portion and a handle connected thereto, and a manually operated mechanism for facilitating the separation of the ice cream scoop from the scooping portion. When an operation of the mechanism is detected, an operation indication signal is issued, which signals are counted by a central unit attached to the scoop. The count value can be displayed or read out applying an external unit. This prior art solution does not make it possible to reliably count the dispensed scoops because the operation of the mechanism does not necessarily mean that a scoop has been dispensed, so accurate portion counting is not possible applying solely this type of sensor.

### DISCLOSURE OF THE INVENTION

The object of the present invention is to provide a portion counting system and method that eliminate the drawbacks of prior art solutions to the greatest possible extent. The object of the present invention is, in particular, to provide a portion counting system and a method for counting dispensed portions of a foodstuff with a creamy consistency that ensure that the portions are counted reliably, providing an accurate count value, without hampering the working process, in an automated manner.

The objects according to the invention have been fulfilled by the portion counting system according to claim 1 and the portion counting method according to claim 10. Preferred embodiments of the invention are defined in the dependent claims.

The solution according to the invention is based on the recognition that by sensing and detecting the movements and movement sequences performed by the operator with the dispensing scoop during the dispensing of the scoops, and by acquiring movement and placement data, additional information can be provided that allows for accurately and reliably counting the scoops being sold. Various dispensing scoop types are available in the market, and the invention can be applied with all of them because they all have a characteristic movement sequence that is performed when ice cream scoops are dispensed.

Dispensing scoops typically consist of two main portions, a hollow or hemispherical-shaped end applied for picking up and dispensing ice cream, and a scoop handle comprising a movable mechanism that allows ice cream stuck inside the hemispherical portion to separate therefrom and drop into a cone or glass. Different scoop types may have different movable mechanisms, but each of these mechanisms realises such a movement/displacement that can be detected for the purposes of the invention.

### BRIEF DESCRIPTION OF THE DRAWINGS

Preferred embodiments of the invention will be explained referring to the accompanying drawings, where
Fig. 1 is a schematic view of a scoop provided with an electronic device according to the invention,
Fig. 2 is the block diagram of the electronic device,
Fig. 3 is a schematic diagram showing the structure and communications of a system according to the invention, and
Fig. 4 is a schematic front view of a central data collection unit according to the invention.

### MODES FOR CARRYING OUT THE INVENTION

According to a first aspect, the invention is a portion counting system for counting dispensed portions of a foodstuff with a creamy consistency, preferably ice cream.

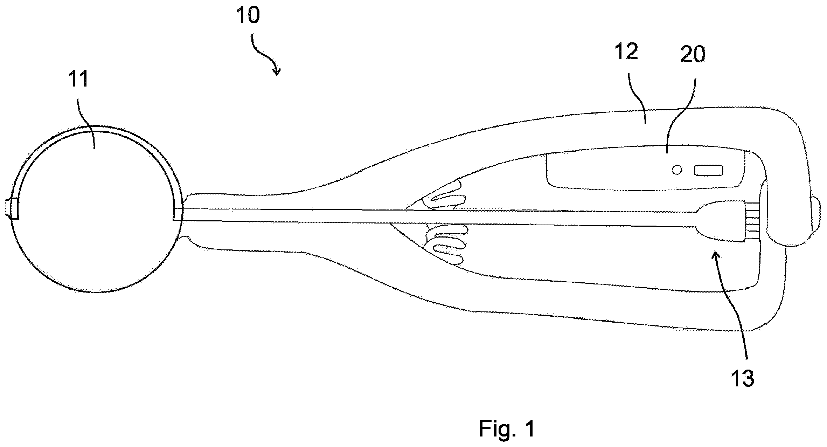

The system according to the invention comprises one or more dispensing scoops 10 illustrated schematically in Fig. 1. As usual, the dispensing scoop 10 comprises a scooping portion 11 also having a hollow, i.e., concave surface, and a handle 12 connected thereto, as well as a manually operated mechanism 13 adapted for facilitating the separation of the foodstuff with a creamy consistency from the scooping portion 11. The mechanism 13 moves a component called "blade" inside the scooping portion 11; the blade moves along the inside wall and thus facilitates separation. The dispensing scoop 10 is further provided with an electronic device 20 implementing the functionality according to the invention.

In all dispensing scoop types, such regions can be found on the handle 12 where a small-size casing receiving an electronic device 20 can be mounted without hampering the usual operation, i.e., this unit becomes an integral part of the handle. The system can be adapted to dispensing scoops of various types by providing in each case such a design for the casing receiving the electronic device 20 that fits perfectly to the handle of the particular scoop type. The casing may be produced, for example, by 3D printing, and can be mounted by an adhesive or applying a non-releasable screw-type mounting solution such that it cannot be removed after mounting. A battery-operated electronic panel implementing the functionality described below can be mounted in this small casing.

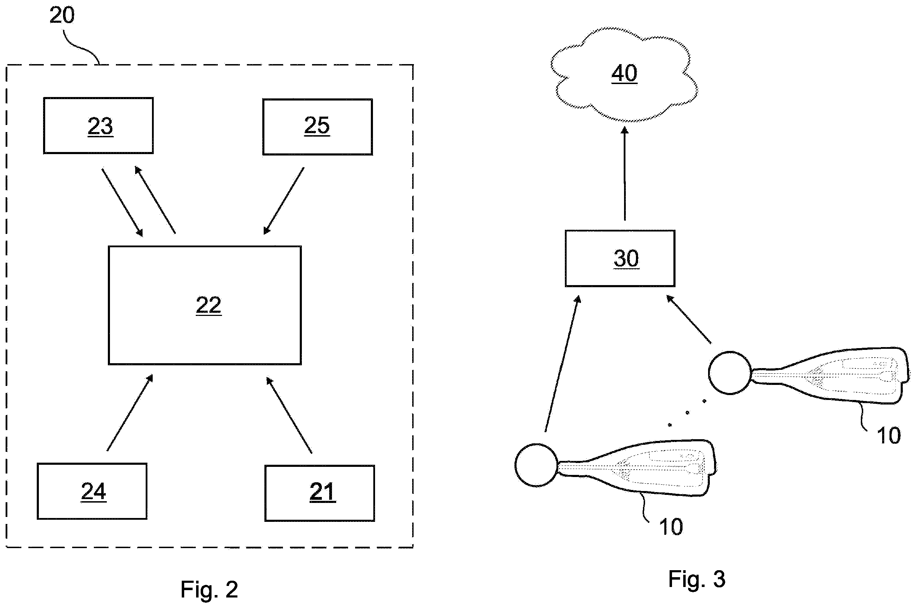

As shown in Fig. 2, the electronic device 20 comprises an operation sensor 21 configured for issuing an operation indication signal in case the operation of the mechanism 13 is detected, a central unit 22 programmed for receiving the operation indication signals and, by taking into account these signals, counting the dispensed portions and temporarily storing a count value, and a data communication device 23 enabling the communication of the count value via a communications channel. The central unit 22 is preferably a computer unit, expediently a microprocessor unit, for example a microcontroller.

In the electronic device 20 of the dispensing scoop 10 according to the invention there is also located a sensor 24 being connected to the central unit 22 and being configured for providing information related to the movement and/or placement of the dispensing scoop 10 based on sensing the movement and/or placement of the dispensing scoop 10, wherein the central unit 22 counts the dispensed portions by also taking into account the information provided by the sensor 24.

Namely, according to the invention, we have recognised that to improve counting accuracy, the movement sequences of scoop dispensing, or individual movements and placements related thereto must be recognised, preferably together with movement sequences directed at cleaning the dispensing scoop or releasing a stuck scoop, and the latter sequences must be left out from the counting process. For example, frequent operation of the blade of the dispensing scoop 10 may only occur during scoop release and placement, and thus a minimum duration (time interval) required for picking up and dispensing another scoop can be determined empirically; during this time interval further scoops must not be counted. Movements and movement sequences are expediently established by empirical measurements; however, they may be dependent on various factors, based on which the detection thresholds can be dynamically adjusted, even during use. **It** can thus be ensured this way that the system counts every scoop, but no extra scoops are counted incorrectly, e.g. in the case of stuck scoops.

Therefore, in addition to the operation indication signals related to the mechanism 13, the placement and/or movement of the dispensing scoop 10 must also be considered for counting the portions. For example, for releasing and placing the scoops, the dispensing scoop 10 must be held such that the scooping portion 11 also faces downward, i.e., in a direction identical with the gravitational force, because the scoop is only separated by the blade 11 from the surface of the scooping portion but is placed into the cone or glass with the help of the force of gravity. When releasing and placing scoops, the dispensing scoop 10 is brought near its rest placement, i.e., it does not move up or down or to the left or right, only slowly rotates about one of its axes. For precise counting, it is expedient to recognise these movements, too.

Because the dispensing scoop 10 itself has a small size, a device mountable on it without hampering operability must be extremely small-sized. With such a small-sized device, direct communication with the mobile network is not feasible due to the small battery, so it has been imperative to develop a receiver unit for the electronic device 20 of the dispensing scoop 10, i.e., a data collection unit 30 that is able to interface with multiple dispensing scoops 10 located in its immediate vicinity and is able to transmit the collected data to the users, for example with the help of a mobile network.

The electronic device 20 can for example be implemented on a printed circuit board having a microcontroller that runs the algorithm developed for processing the sensor signals, recognising the movements, and storing the resulting counts. The power source of the circuit can be a miniature battery usually applied in smartwatches. The battery can be charged for example with a generic mobile phone charger via an IP67 (waterproof) micro-USB connector mounted on the panel.

On the panel there may be further located a miniature ISM band radio transceiver, or a Bluetooth module, with a counterpart of the latter being located in the central electronics. The dispensing scoop 10 periodically contacts the central electronics via this radio connection, transmits the data, and then switches into a low-power standby mode.

According to the invention, accurate counting can be realised either by analysing exclusively the spatial movement of the dispensing scoop 10, or by analysing exclusively the spatial placement of the dispensing scoop 10, but it is preferable if both parameters are sensed/measured. Accordingly, the sensor 24 of Fig. 2 adapted for detecting the movement and/or placement of the dispensing scoop 10 is expediently a triple-axis accelerometer, also known as a G-sensor. Analysing the signals of the triple-axis accelerometer after passing them through a low-pass filter, information can be gained on the placement/orientation of the scoop, while applying a high-pass filter quicker dynamic movements can be detected. The instantaneous acceleration value can be periodically obtained from the triple-axis accelerometer according to the 3 dimensions, and, as gravity is always present, an acceleration of 1 g can be measured in the direction of the vector of the gravitational force also in the rest placement of the scoop, that is, the placement, more particularly for example the spatial orientation, of the scoop can be determined from the X, Y, Z components even in a resting state.

From the acceleration vectors measured along the X, Y, Z directions of the spatial coordinate system determined in relation to the dispensing scoop 10 or a triple-axis accelerometer attached thereto, a vectorial sum, i.e., a combined acceleration vector can be calculated. The combined acceleration vector determines an absolute acceleration value and a spatial direction, which latter can be characterised, for example, with the angles between it and two axes of the coordinate system. A change in the absolute (proper) acceleration value and/or the spatial direction indicates that the scoop has been moved.

According to the invention it is preferable if the central unit 22 comprises an incrementing device that increments the count value upon receiving an operation indication signal only if at least one of the following conditions is met:
- a portion pickup event is identified with regard to a yet uncounted portion based on the information provided by the sensor 24 in relation to the movement and/or the placement of the dispensing scoop 10 prior to receiving the operation indication signal,
- a portion-deposition dispensing scoop state is identified, based on the information provided by the sensor 24 in relation to the movement and/or the placement of the dispensing scoop 10, when receiving the operation indication signal,
- the time elapsed since the last operation indication signal exceeds a predetermined duration threshold.

The conditions may optionally include the order in which the portion pickup event and the portion-deposition dispensing scoop state are identified, and further conditions may also be contemplated.

The incrementing device of the central unit 22 is expediently implemented as a software module adapted for checking whether the counting conditions are met, and for incrementing the count value (i.e., increasing it by one) in case the conditions are fulfilled.

In a preferred embodiment of the invention, the conditions for identifying a portion pickup event comprise that the scooping portion 11 faces at least partially upward, i.e., the direction starting at the deepest point of the concavity formed in the scooping portion 11 and proceeding along the shortest possible path through the internal space defined by the concavity has a component opposite the direction of the gravitational force, and/or the longitudinal axis of the handle 12 extends at an angle with respect to a vertical direction that is smaller than a limit angle chosen between 0° and 45°. Namely, the movement sequences related to portion pickup, for example scooping movements, can be characterised with the temporary occurrence of such situations. Of course, other empirically established threshold values may also be adequate, and a limit angle different from 45° may also be implemented.

In a preferred embodiment of the invention, the conditions for identifying the portion-deposition dispensing scoop state comprise that the placement of the dispensing scoop is within a predetermined dispensing scoop placement range. The predetermined scoop position range can be preferably characterised by one or all of the following:
- The scooping portion 11 faces at least partially downward, i.e., the direction starting at the deepest point of the concavity formed in the scooping portion 11 and proceeding along the shortest possible path through the internal space defined by the concavity has a component coinciding with the direction of the gravitational force; such a situation allows or facilitates the gravitational release of the portion/scoop from the dispensing scoop 10.
- The longitudinal axis of the handle 12 extends at an angle with respect to the horizontal direction that is smaller than a limit angle chosen between 0° and 45°, as our experiments indicate that the orientation of the dispensing scoop 10 during dispensing (scoop deposition) can be characterised with such a placement. Of course, other empirically established threshold values may also be adequate, and a limit angle different from 45° may also be implemented.

Namely, the movement sequences related to portion deposition, for example scoop deposition, can be characterised by the temporary occurrence of such situations.

The predetermined duration threshold for the duration elapsed since the last operation indication signal of the mechanism 13 can be chosen between 1s and 5s, but, as it is detailed below, the duration threshold may also be a dynamic value dependent on other parameters, for example the dynamics of movement detected between the two indications.

The electronic device 20 also comprises a power supply 25 that is expediently implemented as a battery provided with a charging circuit. By way of example, charging can be performed applying an ordinary mobile phone charger. Having been charged for approximately 1 hour, batteries with suitable size may ensure the whole-day operation of the dispensing scoop 10. For charging, first the micro-USB plug should be plugged into the socket of the dispensing scoop 10, followed by connecting the charger to a mains outlet. Charging is preferably indicated by a red LED. When the LED goes out, the dispensing scoop 10 is fully charged. The charged scoop is then ready for use.

As shown in Fig. 3, more than one dispensing scoops 10 can be communicatively connected to a data collection unit 30 configured for receiving the count values via a communications channel. The aggregated data are transmitted by the data collection unit 30 to a suitable entity or person, preferably at scheduled times, over a mobile network 40 or the internet.

Therefore, the system is preferably an ice cream dispensing scoop and an associated information technology system that is adapted for counting the scoops sold and transmitting the data to the owner or a central server via a receiver unit. The receiver unit maintains connection with the dispensing scoops associated with it, and sends the sales-related data to the users with the help of a mobile phone network, utilising SMS or internet communication. It can be advantageously applied at locations where ice cream is sold and data on the daily number of scoops sold is of interest.

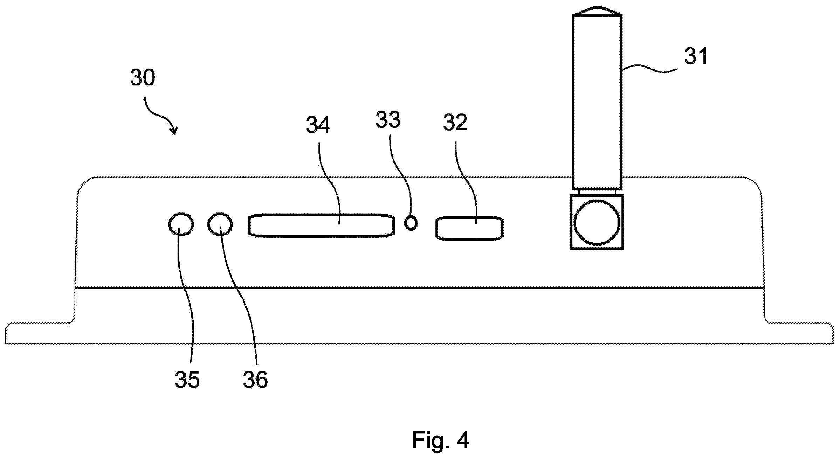

The central data collection unit 30 shown in Fig. 4 is required because the dispensing scoop 10 is so small that it is not feasible to mount on it a device with a battery having a larger mass without hampering its use. The electronics - which for this reason is exceedingly small - is only able to transmit data over a small distance, so the data must be relayed to a central electronic unit powered by a larger battery or connected to a mains outlet.

The exemplary data collection unit 30 shown in Fig. 4 is preferably provided with a GSM antenna 31, but it may also be connected to the internet over an Ethernet connection, and it can be expediently powered via a micro-USB power connector 32. In case a mobile data network connection is applied for operating the data collection unit 30, expediently it is also required to insert a valid SIM card. Prior to inserting the SIM card, asking for a PIN code on startup must be switched off using a mobile phone. To pull out the SIM card tray, first a button located in a hole 33 beside the power connector 32 must be pressed, which causes the tray to pop out slightly from the SIM card socket 34, after which the tray can be manually pulled out. After snapping the SIM card into the tray, the tray must be inserted such that the SIM card faces in the right direction. Alternatively, a push-in push-out-type card reader unit can also be applied. Power supply to the data collection unit 30 can then be turned on, for example applying a micro-USB mobile phone charger, as a result of which the data collection unit 30 turns on. In a few seconds, the intermittent blinking of the orange LED 35 indicates that the (preferably Bluetooth) radio transceiver required for receiving data from the dispensing scoops 10 has been powered on. Switching on of the GSM module of the data collection unit 30 is indicated by the periodic flashing of a blue LED 36. After the blue LED 36, the LED 35 flashes in red a few times while it searches for a network, followed by green flashes of the LED 36 indicating mobile network activity. In normal operation blue, green and orange flashes can be seen, indicating that the data collection unit 30 is ready for use. The ready-to-use unit must expediently be placed near the holder of the dispensing scoop 10, because the effective range of the Bluetooth radio is usually only a few metres.

Therefore, the dispensing scoop 10 preferably communicates with the central unit over a radio link. The radio module can utilise any of the standard technical solutions, i.e., it can be an ISM band radio module, a WIFI module, or a Bluetooth module. These modules only provide a framework for communications, i.e., the same information is exchanged with the data collection unit 30 with all of the modules. Of course, a module applying the radio standard utilised by the dispensing scoop 10 must also be installed in the data collection unit 30

Data are regularly transmitted to the data collection unit 30 by the electronics of the dispensing scoop 10, the data collection unit 30 storing the data for further use. The communications between the dispensing scoop 10 and the data collection unit 30 is preferably fault-tolerant, i.e., successful conclusion of the communication is not a condition of restarting/continuing the counting operation, i.e., there is no data loss even in the case of longer communication dropouts; when communication is reestablished, previous data are also transmitted.

The data collection unit 30 is for example suited for handling seven dispensing scoops, which means that it supports using seven dispensing scoops simultaneously in an ice cream shop. It only gathers data from the dispensing scoops 10 associated with it. It is able to transmit the collected data over a wireless or wired network via SMS or internet connection. It expediently stores sales data for a specific period of time after having transmitted them.

Before using the dispensing scoop 10 for dispensing ice cream, it must be paired with the data collection unit 30. It is imperative for successful pairing that only one data collection unit 30 is active in the vicinity of the dispensing scoop 10. Pairing can be performed for example by holding the dispensing scoop 10 by its head and tapping its handle twice against the table while the data collection unit 30 is in operation. This dynamics of movement is interpreted by the central unit 22 of the dispensing scoop 10 as a pairing request; of course, other dynamic movements different from usual movements associated with dispensing ice cream may also be suited for this purpose. The LED of the dispensing scoop 10 flashes green a few times during the search for the data collection unit 30, followed by three orange flashes indicating a successful pairing. In case of an unsuccessful pairing, the green flashing of the LED stops after a short time, and then pairing can be tried again.

Count data are sent by SMS by the data collection unit 30 to a preset phone number preferably at preset times, for example at the same time each day, or the data can be retrieved any time expediently by sending a command by SMS. The data collection unit 30 records the data from the dispensing scoops 10 every day, and then restarts counting. In case we would like to retrieve earlier data again, it is possible to query data for example for any of the last 31 days.

The data collection unit 30 may also be implemented applying a printed circuit board having a microcontroller providing data exchange between various communication units as its main component. The ISM radio or Bluetooth module installed on the panel periodically contacts the dispensing scoops 10 associated with it and retrieves data from them. The controller stores the data and sends an SMS notification to the preset phone numbers with the help of a GSM module each day at preset times, but it may also transmit them to a server over a wired internet connection. The panel can be installed in a commercially available casing manufactured specifically for housing electronic units. The module can be powered utilising a commercially available, standard extra-low voltage plug-in power supply. Of course, data transmission may also be carried out utilising wired or mobile internet connections and server-based central data storage.

The central component part of the electronic device 20 of the dispensing scoop 10 is the central unit 22 that must be able to process the signals coming from the sensors; after processing the signals, with the help of its programmed algorithm it counts the scoops dispensed and stores relevant information. The central unit 22 shares its data with the data collection unit 30 preferably by means of communication organised in packets. Using time-shared communication, the data collection unit 30 is able to simultaneously keep contact with multiple dispensing scoops 10.

For counting portions or scoops it is expedient to detect the picking up and the release/deposition of scoops. It is imperative that each placement must be followed by picking up a scoop such that a scoop can be placed again. When a scoop is released/deposited, the longitudinal axis of the dispensing scoop 10 is at a near-horizontal placement, and no highly dynamic movements occur. In this placement it may happen that for releasing/placing the scoop the blade must be pressed multiple times, however, the placement of the dispensing scoop 10 does not change significantly. In such cases, moving the blade multiple times is allowed preferably over a longer time interval without incrementing the portion count. However, in case multiple scoops are dispensed in a quick succession, the dispensing scoop 10 undergoes highly dynamic movements between the blade movements that follow each other relatively quickly, because of which it is preferable to keep the threshold value of the counting interval low.

In a preferred embodiment of the invention, therefore, upon receiving an operation indication signal the central unit 22 increments the count value only if the dynamics of movement is below a dynamics of movement threshold. In the context of the present invention, the term "dynamics of movement" is used to refer to the dynamism of the temporal process of a movement, which can be characterised for example with acceleration values, maximum acceleration, average acceleration, modifications or changes of the directions of accelerations, or with the intermittency or "jaggedness" of acceleration changes. For example, in case a triple-axis accelerometer is applied, the dynamics of movement can be characterised with the temporal change of the length and direction of the combined acceleration vector, i.e., expediently the (absolute or percentage) difference relative to the previous calculated value. These or other dynamic parameters can be utilised, for example in an empirical manner, for establishing simpler or more complex criteria, limits, and intervals.

In a preferred embodiment of the invention, therefore, the conditions for identifying a portion-deposition dispensing scoop state further comprise that the dynamics of movement of the dispensing scoop 10 is under a predetermined dynamics of movement threshold.

It is also preferable if the duration threshold applied in case the dynamics of movement detected between the operation indication signal and the previous operation indication signal is under the predetermined dynamics of movement threshold is longer than the threshold applied in case the dynamics of movement detected between the two signals is above the predetermined dynamics of movement threshold.

From the aspect of energy consumption, it is preferable if the dispensing scoop 10 has a reduced energy-consumption standby state that is switched on and off based on the dynamics of movement detected by the sensor 24. Thereby, the sensor 24, i.e., preferably the triple-axis accelerometer may play an important role in achieving extended battery operation, as in the rest placement the circuits of the dispensing scoop 10 can be in low power-consumption mode as long as the dispensing scoop 10 is not moved. When the triple-axis accelerometer detects that the dispensing scoop 10 has been moved, the circuits of the dispensing scoop 10 can be woken up and switched into the required mode, and when no further movements or only movements below a threshold can be detected, the dispensing scoop 10 can again be switched into standby mode. Preferably, therefore, the dispensing scoop 10 is switched from the normal operating state into a reduced energy-consumption standby state if no movement is detected by the sensor 24 over a given time interval, switching the dispensing scoop 10 from the standby state back into the normal operating state in case movement is detected.

Since both the sampling and calculation operations consume energy, in the standby state their frequency is preferably reduced, for example sampling is performed and the combined acceleration vector (more particularly, the magnitude and spatial direction of acceleration) is calculated at a uniform rate of 1 to 5 times a second. One or both values may be used for detecting that the scoop has been moved. For example, it can be interpreted as a movement when the current spatial direction differs from the spatial direction determined by the previous calculation by at least an empirically predetermined value, i.e., the difference is above an angular deviation threshold value. For performing calculations 1 to 5 times a second, the angular deviation threshold value may preferably be chosen in the range of 15 to 60 degrees. It can also be interpreted as a movement when the magnitude or absolute value of the acceleration differs from the value obtained by the previous calculation by at least one - expediently also empirically predetermined - percentage, i.e., the difference is above a percentage threshold value. For performing calculations 1 to 5 times a second, the percentage threshold value may preferably be chosen in the range of 5% to 50%. It is also possible to apply an appropriately chosen combination of the two measured values and/or the two threshold values for detecting movement. After detecting a movement, the frequency of sampling and calculation operations is preferably increased, preferably up to between 10 and 150 instances per second, i.e., the movement of the dispensing scoop 10 and the blade are monitored more frequently.

In case the direction and/or amplitude of the measured combined vector do not change, and/or stays below above a (dynamics of movement) threshold value for a predetermined time, for example over a time interval chosen between 10-30 seconds, the central unit 22 initiates the sending of the count value to the central receiver, and then returns into the reduced power-consumption standby state. Applying a threshold value is preferable also because low-amplitude oscillations that are caused by environmental effects, for example vehicle traffic, and are detected by the triple-axis accelerometer may also occur in the rest placement of the dispensing scoop 10.

It is also preferable from the aspects of energy consumption and the organisation of multi-scoop communication if the dispensing scoop 10 has a data communication device 23 activated based on detecting the termination of the movement of the dispensing scoop 10. Preferably, therefore, the count value is communicated to the data collection unit 30 via the data communication device 23 of the dispensing scoop 10 when detecting the termination of the movement of the dispensing scoop 10 or immediately thereafter.

In the portion counting method for counting dispensed portions of a foodstuff with a creamy consistency according to the invention we apply the above-described system, the method comprising the steps of:
- issuing, each time the operation of the mechanism 13 of the dispensing scoop 10 is detected, a respective operation indication signal to the central unit 22 of the dispensing scoop 10,
- providing to the central unit 22 information related to the movement and/or position of the dispensing scoop 10 based on sensing the movement and/or position of said dispensing scoop 10,

- receiving, by the central unit 22, the operation indication signals and the information related to the movement and/or placement of the dispensing scoop 10, and counting, by collectively taking into account these, the dispensed portions, obtaining a count value that is temporarily stored in the central unit (22), and
- communicating, applying the data communication device 23, the count value to the data collection unit 30 via the communications channel.

Movement analysis can be performed empirically, and based on the analysis, specific threshold values and intervals can also be determined in an empirical way, the values being optionally adjusted during use in a dynamic or self-learning manner. As it can be understood by the skilled person, ideal or near-ideal values can be found for a given working environment or even for the habits of a given operator.

Movement analysis, and, based on that, the process of determining the given threshold values, can be performed for example by switching the dispensing scoop 10 into an "observation" (DEBUG) mode, wherein it continuously sends the values measured by the sensors to a computer through a data acquisition interface similar to the data collection unit 30. The data collected by the computer are visualised by a suitable software (for example SciLAB), analysed and filtered by an appropriate algorithm, followed by performing simulations with the obtained parameters and, provided the results are favourable, the parameters are uploaded to the electronic device 20 of the dispensing scoop 10 and real-world tests are carried out. Having performed the tests, the process can be repeated applying the recorded data.

Thus, the conditions for enabling counting can be determined through measurements, i.e., in an empirical manner. Since the compartments for storing ice cream are usually installed such that all of them can be seen by serving staff, when making/forming the scoops the longitudinal axis of the scoop is brought into a non-horizontal orientation. Of course, the direction of shaping/forming also depends on how much ice cream is in the container, on whether the scoop is being formed from the back towards the front or vice versa, and on the handedness of the serving staff member. These conditions may all be taken into consideration during the movement analysis process, and thereby the preprogrammed characteristic parameters of these movements can be recognised by the electronics when the ice cream or other foodstuff with a creamy consistency is being sold, and based on that, accurate portion counting can be performed.

The devices and modules according to the invention can be implemented in software, in hardware, or by a mixed hardware-software implementation. The invention can be applied in any such field wherein ice cream or other foodstuff with a creamy consistency is sold.

## Claims

1. A portion counting system for counting dispensed portions of a foodstuff with a creamy consistency, the system comprising a dispensing scoop (10), said dispensing scoop (10) comprising
- a hollow scooping portion (11) and a handle (12) connected thereto,
- a manually operated mechanism (13) for facilitating a separation of the foodstuff with a creamy consistency from the scooping portion (11),
- an operation sensor (21) configured to issue an operation indication signal in case an operation of the mechanism (13) is detected,
- a central unit (22) programmed for receiving the operation indication signals and, by taking into account these signals, counting the dispensed portions and temporarily storing a count value, and
- a data communication device (23) enabling a communication of the count value via a communications channel,
wherein the system further comprises a data collection unit (30) configured to receive the count value via the communications channel, **characterized by** the dispensing scoop (10) further comprising
- a sensor (24) being connected to the central unit (22) and being configured to provide information related to a spatial movement and/or a spatial placement of the dispensing scoop (10) based on sensing the spatial movement and/or the spatial placement of said dispensing scoop (10),
wherein the central unit (22) of the dispensing scoop (10) is configured to count the dispensed portions by also taking into account the information provided by the sensor (24).

2. The system according to claim 1, **characterised in that** the central unit (22) comprises a device that, upon receiving an operation indication signal, increments the count value only if at least one of the following conditions is met:
- a portion pickup event is identified with regard to a yet uncounted portion based on the information provided by the sensor (24) in relation to the spatial movement and/or spatial placement of the dispensing scoop (10) prior to receiving the operation indication signal,
- a portion-deposition dispensing scoop state is identified, based on the information provided by the sensor (24) in relation to the spatial movement and/or the spatial placement of the dispensing scoop (10), at receiving the operation indication signal,
- a time elapsed since the last operation indication signal exceeds a predetermined duration threshold.

3. The system according to claim 1 or 2, **characterised in that** the conditions for identifying a portion pickup event comprise that the scooping portion (11) faces at least partially upward, and/or a longitudinal axis of the handle (12) extends at an angle with respect to a vertical direction that is smaller than a limit angle chosen between 0° and 45°.

4. The system according to any of claims 1 to 3, **characterised in that** the conditions for identifying a portion-deposition dispensing scoop state comprise that the scooping portion (11) faces at least partially downward, and/or a longitudinal axis of the handle (12) extends at an angle with respect to a horizontal direction that is smaller than a limit angle chosen between 0° and 45°.

5. The system according to any of claims 2 to 4, **characterised in that** the conditions for identifying a portion-deposition dispensing scoop state further comprise that a dynamics of movement of the dispensing scoop (10) is under a predetermined dynamics of movement threshold.

6. The system according to claim 5, **characterised in that** the duration threshold applied in case the dynamics of movement detected between the operation indication signal and the previous operation indication signal is under the predetermined dynamics of movement threshold is longer than the threshold applied in case the dynamics of movement detected between the two signals is above the predetermined dynamics of movement threshold.

7. The system according to any of claims 1 to 6, **characterised in that** the dispensing scoop (10) has a reduced energy-consumption standby state that is switched on and off based on the dynamics of movement detected by the sensor (24).

8. The system according to any of claims 1 to 7, **characterised in that** the data communication device (23) of the dispensing scoop (10) is activated based on a decrease of the dynamics of movement of the dispensing scoop (10) below a predetermined dynamics of movement threshold.

9. The system according to claim 1, **characterised in that** the sensor (24) is a triple-axis accelerometer, and the information related to the spatial movement and/or spatial placement of the dispensing scoop (10) comprises acceleration values measured along the tree axes.

10. A portion counting method for counting dispensed portions of a foodstuff with a creamy consistency, **characterised by** applying the portion counting system according to claim 1, the method further comprising the following steps:
- issuing, each time the operation of the mechanism (13) of the dispensing scoop (10) is detected, a respective operation indication signal to the central unit (22) of the dispensing scoop (10),
- providing to the central unit (22) information related to the spatial movement and/or the spatial placement of the dispensing scoop (10) based on sensing the spatial movement and/or the spatial placement of said dispensing scoop (10),
- receiving, by the central unit (22), the operation indication signals and the information related to the spatial movement and/or the spatial placement of the dispensing scoop (10), and counting, by collectively taking into account these, the dispensed portions, obtaining a count value that is temporarily stored in the central unit (22), and
- communicating, applying the data communication device (23), the count value to the data collection unit (30) via the communications channel.

11. The method according to claim 10, **characterised by** incrementing the count value upon receiving an operation indication signal only if at least one of the following conditions is met:
- a portion pickup event is identified with regard to a yet uncounted portion based on the information provided by the sensor (24) in relation to the spatial movement and/or spatial placement of the dispensing scoop (10) prior to receiving the operation indication signal,
- a portion-deposition dispensing scoop state is identified, based on the information provided by the sensor (24) in relation to the spatial movement and/or the spatial placement of the dispensing scoop (10), at receiving the operation indication signal,
- a time elapsed since the last operation indication signal exceeds a predetermined duration threshold.

12. The method according to claim 11, **characterised in that** the conditions for identifying a portion pickup event comprise that the scooping portion (11) faces at least partially upward, and/or a longitudinal axis of the handle (12) extends at an angle with respect to a vertical direction that is smaller than a limit angle chosen between 0° and 45°.

13. The method according to claim 11 or 12, **characterised in that** the conditions for identifying a portion-deposition dispensing scoop state comprise that the scooping portion (11) faces at least partially downward, and/or a longitudinal axis of the handle (12) extends at an angle with respect to a horizontal direction that is smaller than a limit angle chosen between 0° and 45°.

14. The method according to any of claims 11 to 13, **characterised in that** the conditions for identifying a portion-deposition dispensing scoop state further comprise that a dynamics of movement of the dispensing scoop (10) is under a predetermined dynamics of movement threshold.

15. The method according to claim 14, **characterised in that** the duration threshold applied in case the dynamics of movement detected between the operation indication signal and the previous operation indication signal is under the predetermined dynamics of movement threshold is longer than the threshold applied in case the dynamics of movement detected between the two signals is above the predetermined dynamics of movement threshold.

16. The method according to any of claims 10 to 15, **characterised by** switching the dispensing scoop (10) from normal operating state into a standby state after detecting, by the sensor (24), that the dynamics of movement is below a predetermined dynamics of movement threshold over a time interval, and switching the dispensing scoop (10) from the standby state back into the normal operating state in case a dynamics of movement above the dynamics of movement threshold is detected.

17. The method according to any of claims 10 to 16, **characterised in that** the count value is communicated to the data collection unit (30) through the data communication device (23) of the dispensing scoop (10) after detecting that the dynamics of movement of the dispensing scoop (10) has fallen below a predetermined dynamics of movement threshold.

## Patentansprüche

1. Portionszählsystem zum Zählen von ausgegebenen Portionen eines Lebensmittels mit cremiger Konsistenz, wobei das System einen Ausgabeportionierlöffel (10) aufweist, wobei der Ausgabeportionierlöffel (10) aufweist
- einen hohlen Löffelabschnitt (11) und einen damit verbundenen Griff (12),
- einen manuell betätigten Mechanismus (13) zum Erleichtern einer Trennung des Lebensmittels mit cremiger Konsistenz von dem Löffelabschnitt (11),
- einen Betätigungssensor (21), der ausgebildet ist, ein Betätigungsanzeigesignal auszugeben, wenn eine Betätigung des Mechanismus (13) erkannt wird,
- eine Zentraleinheit (22), die dazu programmiert ist, die Betätigungsanzeigesignale zu empfangen und unter Berücksichtigung dieser Signale die ausgegebenen Portionen zu zählen und einen Zählwert vorübergehend zu speichern, und
- eine Datenkommunikationsvorrichtung (23), die eine Übermittlung des Zählwerts über einen Kommunikationskanal ermöglicht,
wobei das System ferner eine Datenerfassungseinheit (30) aufweist, die ausgebildet ist, den Zählwert über den Kommunikationskanal zu empfangen,
**dadurch gekennzeichnet, dass**
die Ausgabeportionierlöffel (10), die ferner aufweist
- einen Sensor (24), der mit der Zentraleinheit (22) verbunden und ausgebildet ist, Informationen über eine räumliche Bewegung und/oder eine räumliche Platzierung des Ausgabeportionierlöffels (10) auf der Grundlage der Erfassung der räumlichen Bewegung und/oder der räumlichen Platzierung des Ausgabeportionierlöffel (10) bereitzustellen,
wobei die Zentraleinheit (22) des Ausgabeportionierlöffels (10) ausgebildet ist, die dosierten Portionen unter Berücksichtigung der von dem Sensor (24) bereitgestellten Informationen zu zählen.

2. System gemäß Anspruch 1, **dadurch gekennzeichnet, dass** die Zentraleinheit (22) eine Vorrichtung aufweist, die bei Empfang eines Betriebsanzeigesignals den Zählwert nur dann erhöht, wenn mindestens eine der folgenden Bedingungen erfüllt ist:
- es wird ein Portionsaufnahmeereignis in Bezug auf eine noch nicht gezählte Portion auf der Grundlage der von dem Sensor (24) bereitgestellten Informationen in Bezug auf die räumliche Bewegung und/oder räumliche Platzierung des Ausgabeportionierlöffels (10) vor dem Empfang des Betriebsanzeigesignals,
- es wird ein Portionsabgabezustand des Ausgabeportionierlöffels basierend auf den Informationen, die von dem Sensor (24) in Bezug auf die räumliche Bewegung und/oder die räumliche Platzierung des Ausgabeportionierlöffels (10) beim Empfang des Betriebsanzeigesignals bereitgestellt werden, identifiziert,
- eine seit dem letzten Betriebsanzeigesignal verstrichene Zeit einen überschreitet vorbestimmten Zeitdauerschwellenwert.

3. System gemäß Anspruch 1 oder 2, **dadurch gekennzeichnet, dass** die Bedingungen zum Identifizierung eines Portionsaufnahmeereignisses umfassen, dass der Löffelabschnitt (11) zumindest teilweise nach oben zeigt und/oder sich eine Längsachse des Griffs (12) in einem Winkel zu einer vertikalen Richtung erstreckt, der kleiner ist als ein von 0° bis 45° gewählter Grenzwinkel.

4. System gemäß einem der Ansprüche 1 bis 3, **dadurch gekennzeichnet, dass** die Bedingungen zum Identifizieren eines Portionsausgabezustands des Ausgabepositionierlöffels umfassen, dass der Löffelabschnitt (11) zumindest teilweise nach unten zeigt und/oder eine Längsachse des Griffs (12) sich in einem Winkel zu einer horizontalen Richtung erstreckt, der kleiner ist als ein von 0° bis 45° gewählter Grenzwinkel.

5. System gemäß einem der Ansprüche 2 bis 4, **dadurch gekennzeichnet, dass** die Bedingungen zum Identifizieren eines Portionsausgabezustands des Ausgabepositionierlöffels ferner umfassen, dass eine Bewegungsdynamik des Ausgabeportionierlöffels (10) unter einem vorbestimmten Bewegungsdynamikschwellenwert liegt.

6. System gemäß Anspruch 5, **dadurch gekennzeichnet, dass** der Zeitdauerschwellenwert, der angewendet wird, wenn die zwischen dem Betriebsanzeigesignal und dem vorherigen Betriebsanzeigesignal erfasste Bewegungsdynamik unter dem vorgegebenen Bewegungsdynamikschwellenwert liegt, länger ist als der Schwellenwert, der angewendet wird, wenn die zwischen den beiden Signalen erfasste Bewegungsdynamik über dem vorgegebenen Bewegungsdynamikschwellenwert liegt.

7. System gemäß einem der Ansprüche 1 bis 6, **dadurch gekennzeichnet, dass** der Ausgabeportionierlöffel (10) einen Bereitschaftszustand mit reduziertem Energieverbrauch aufweist, der auf der Grundlage der von dem Sensor (24) erfassten Bewegungsdynamik ein- und ausgeschaltet wird.

8. System gemäß einem der Ansprüche 1 bis 7, **dadurch gekennzeichnet, dass** die Datenkommunikationsvorrichtung (23) des Ausgabeportionierlöffels (10) auf der Grundlage einer Abnahme der Bewegungsdynamik des Ausgabeportionierlöffels (10) unter einen vorgegebenen Schwellenwert für die Bewegungsdynamik aktiviert wird.

9. System gemäß Anspruch 1, **dadurch gekennzeichnet, dass** der Sensor (24) ein dreiachsiger Beschleunigungsmesser ist und die Informationen bezüglich der räumlichen Bewegung und/oder räumlichen Platzierung des Ausgabeportionierlöffels (10) Beschleunigungswerte umfassen, die entlang der drei Achsen gemessen werden.

10. Verfahren zum Zählen von Portionen eines Lebensmittels mit cremiger Konsistenz, **gekennzeichnet durch** die Anwendung des Portionszählsystems gemäß Anspruch 1, wobei das Verfahren ferner die folgenden Schritte umfasst:
- sobald die Betätigung des Mechanismus (13) des Ausgabeportionierlöffels (10) erfasst wird, Senden eines entsprechenden Betätigungsanzeigesignals an die Zentraleinheit (22) des Ausgabeportionierlöffel (10),
- Bereitstellen von Informationen über die räumliche Bewegung und/oder die räumliche Positionierung des Ausgabeportionierlöffels (10) an die Zentraleinheit (22) auf der Grundlage der Erfassung der räumlichen Bewegung und/oder der räumlichen Positionierung des Ausgabeportionierlöffels (10),
- Empfangen der Betätigungsanzeigesignale und der Informationen bezüglich der räumlichen Bewegung und/oder der räumlichen Anordnung des Ausgabeportionierlöffels (10) durch die Zentraleinheit (22) und Zählen der dosierten Portionen unter gemeinsamer Berücksichtigung dieser Informationen, wobei ein Zählwert erhalten wird, der vorübergehend in der Zentraleinheit (22) gespeichert wird, und
- Übermitteln des Zählwerts unter Verwendung der Datenkommunikationseinrichtung (23) über den Kommunikationskanal an die Datenerfassungseinheit (30).

11. Verfahren gemäß Anspruch 10, **dadurch gekennzeichnet, dass** der Zählwert bei Empfang eines Betriebsanzeigesignals nur dann erhöht wird, wenn mindestens eine der folgenden Bedingungen erfüllt ist:
- es wird ein Portionsaufnahmeereignis in Bezug auf eine noch nicht gezählte Portion auf der Grundlage der von dem Sensor (24) bereitgestellten Informationen in Bezug auf die räumliche Bewegung und/oder räumliche Platzierung des Ausgabeportionierlöffels (10) vor dem Empfang des Betriebsanzeigesignals,
- es wird ein Portionsabgabezustand des Ausgabeportionierlöffels basierend auf den Informationen, die von dem Sensor (24) in Bezug auf die räumliche Bewegung und/oder die räumliche Platzierung des Ausgabeportionierlöffels (10) beim Empfang des Betriebsanzeigesignals bereitgestellt werden, identifiziert,
- eine seit dem letzten Betriebsanzeigesignal verstrichene Zeit einen überschreitet vorbestimmten Zeitdauerschwellenwert.

12. Verfahren gemäß Anspruch 11, **dadurch gekennzeichnet, dass** die Bedingungen zum Identifizieren eines Portionsaufnahmeereignisses umfassen, dass der Löffelabschnitt (11) zumindest teilweise nach oben zeigt und/oder sich eine Längsachse des Griffs (12) in einem Winkel zu einer vertikalen Richtung erstreckt, der kleiner ist als ein von 0° bis 45° gewählter Grenzwinkel.

13. Verfahren gemäß Anspruch 11 oder 12, **dadurch gekennzeichnet, dass** die Bedingungen zum Identifizieren eines Portionsausgabezustands des Ausgabepositionierlöffels umfassen, dass der Löffelabschnitt (11) zumindest teilweise nach unten zeigt und/oder eine Längsachse des Griffs (12) sich in einem Winkel zu einer horizontalen Richtung erstreckt, der kleiner ist als ein von 0° bis 45° gewählter Grenzwinkel.

14. Verfahren gemäß einem der Ansprüche 11 bis 13, **dadurch gekennzeichnet, dass** die Bedingungen zum Identifizieren eines Portionsausgabezustands des Ausgabepositionierlöffels ferner umfassen, dass eine Bewegungsdynamik des Ausgabeportionierlöffels (10) unter einem vorbestimmten Bewegungsdynamikschwellenwert liegt.

15. Verfahren gemäß Anspruch 14, **dadurch gekennzeichnet, dass** der Zeitdauerschwellenwert, der angewendet wird, wenn die zwischen dem Betriebsanzeigesignal und dem vorherigen Betriebsanzeigesignal erfasste Bewegungsdynamik unter dem vorgegebenen Bewegungsdynamikschwellenwert liegt, länger ist als der Schwellenwert, der angewendet wird, wenn die zwischen den beiden Signalen erfasste Bewegungsdynamik über dem vorgegebenen Bewegungsdynamikschwellenwert liegt.

16. Verfahren gemäß einem der Ansprüche 10 bis 15, **dadurch gekennzeichnet, dass** der Ausgabeportionierlöffel (10) aus dem normalen Betriebszustand in einen Bereitschaftszustand versetzt wird, nachdem durch den Sensor (24) erfasst wird, dass die Bewegungsdynamik über ein Zeitintervall hinweg unter einem vorgegebenen Schwellenwert für die Bewegungsdynamik liegt, und dass der Ausgabeportionierlöffel (10) aus dem Bereitschaftszustand wieder in den normalen Betriebszustand versetzt wird, wenn eine Bewegungsdynamik oberhalb des Bewegungsdynamikschwellenwerts erfasst wird.

17. Verfahren gemäß einem der Ansprüche 10 bis 16, **dadurch gekennzeichnet, dass** der Zählwert über die Datenkommunikationsvorrichtung (23) des Ausgabeportionierlöffels (10) an die Datenerfassungseinheit (30) übermittelt wird, nachdem erfasst wurde, dass die Bewegungsdynamik des Ausgabeportionierlöffels (10) unter einen vorbestimmten Bewegungsdynamikschwellenwert gefallen ist.

## Revendications

1. Système de comptage de portions pour compter des portions distribuées d'un produit alimentaire à consistance crémeuse, le système comprenant une cuillère doseuse (10), ladite cuillère doseuse (10) comprenant
- une partie de prélèvement creuse (11) et un manche (12) relié à celle-ci,
- un mécanisme à commande manuelle (13) pour faciliter une séparation du produit alimentaire à consistance crémeuse de la partie de prélèvement (11),
- un capteur d'actionnement (21) configuré pour émettre un signal d'indication d'actionnement lorsqu'un actionnement du mécanisme (13) est détecté,
- une unité centrale (22) programmée pour recevoir les signaux d'indication d'actionnement et, en tenant compte de ces signaux, compter les portions distribuées et stocker temporairement une valeur de comptage, et
- un dispositif de communication de données (23) permettant une communication de la valeur de comptage via un canal de communication,
dans lequel le système comprend en outre une unité de collecte de données (30) configurée pour recevoir la valeur de comptage via le canal de communication, **caractérisé en ce que** la cuillère doseuse (10) comprend en outre
- un capteur (24) étant connecté à l'unité centrale (22) et étant configuré pour fournir des informations relatives à un mouvement spatial et/ou à un positionnement spatial de la cuillère doseuse (10) en se basant sur la détection du mouvement spatial et/ou du positionnement spatial de ladite cuillère doseuse (10),
dans lequel l'unité centrale (22) de la cuillère doseuse (10) est configurée pour compter les portions distribuées en tenant également compte des informations fournies par le capteur (24).

2. Système selon la revendication 1, **caractérisé en ce que** l'unité centrale (22) comprend un dispositif qui, lors de la réception d'un signal d'indication d'actionnement, incrémente la valeur de comptage uniquement si au moins l'une des conditions suivantes est remplie :
- un événement de prélèvement de portion est identifié par rapport à une portion pas encore comptabilisée sur la base des informations fournies par le capteur (24) par rapport au mouvement spatial et/ou au positionnement spatial de la cuillère doseuse (10) avant la réception du signal d'indication d'actionnement,
- un état de cuillère doseuse déposant une portion est identifié, sur la base des informations fournies par le capteur (24) par rapport au mouvement spatial et/ou au positionnement spatial de la cuillère doseuse (10), à la réception du signal d'indication d'actionnement,
- un temps écoulé depuis le dernier signal d'indication d'actionnement dépasse un seuil de durée prédéterminé.

3. Système selon la revendication 1 ou 2, **caractérisé en ce que** les conditions d'identification d'un événement de prélèvement de portion comprennent le fait que la partie de prélèvement (11) est orientée au moins partiellement vers le haut, et/ou qu'un axe longitudinal du manche (12) s'étend selon un angle par rapport à une direction verticale qui est inférieur à un angle limite choisi entre 0° et 45°.

4. Système selon l'une des revendications 1 à 3, **caractérisé en ce que** les conditions d'identification d'un état de cuillère doseuse déposant une portion comprennent le fait que la partie de prélèvement (11) est orientée au moins partiellement vers le bas, et/ou qu'un axe longitudinal du manche (12) s'étend selon un angle par rapport à une direction horizontale qui est inférieur à un angle limite choisi entre 0° et 45°.

5. Système selon l'une des revendications 2 à 4, **caractérisé en ce que** les conditions d'identification d'un état de cuillère doseuse déposant une portion comprennent en outre le fait qu'une dynamique de mouvement de la cuillère doseuse (10) est inférieure à un seuil de dynamique de mouvement prédéterminé.

6. Système selon la revendication 5, **caractérisé en ce que** le seuil de durée appliqué dans le cas où la dynamique de mouvement détectée entre le signal d'indication d'actionnement et le précédent signal d'indication d'actionnement est inférieure au seuil de dynamique de mouvement prédéterminé est plus long que le seuil appliqué dans le cas où la dynamique de mouvement détectée entre les deux signaux est supérieure au seuil de dynamique de mouvement prédéterminé.

7. Système selon l'une des revendications 1 à 6, **caractérisé en ce que** la cuillère doseuse (10) présente un état de veille à consommation d'énergie réduite qui s'active et se désactive en fonction de la dynamique de mouvement détectée par le capteur (24).

8. Système selon l'une des revendications 1 à 7, **caractérisé en ce que** le dispositif de communication de données (23) de la cuillère doseuse (10) est activé sur la base d'une diminution de la dynamique de mouvement de la cuillère doseuse (10) au-dessous d'un seuil de dynamique de mouvement prédéterminé.

9. Système selon la revendication 1, **caractérisé en ce que** le capteur (24) est un accéléromètre triaxial, et les informations relatives au mouvement spatial et/ou au positionnement spatial de la cuillère doseuse (10) comprennent des valeurs d'accélération mesurées le long des trois axes.

10. Procédé de comptage de portions pour compter des portions distribuées d'un produit alimentaire à consistance crémeuse, **caractérisé par** l'application du système de comptage de portions selon la revendication 1, le procédé comprenant en outre les étapes suivantes :
- l'émission, chaque fois que l'actionnement du mécanisme (13) de la cuillère doseuse (10) est détecté, d'un signal d'indication d'actionnement respectif à l'unité centrale (22) de la cuillère doseuse (10),
- la fourniture, à l'unité centrale (22), d'informations relatives au mouvement spatial et/ou au positionnement spatial de la cuillère doseuse (10) sur la base de la détection du mouvement spatial et/ou du positionnement spatial de ladite cuillère doseuse (10),
- la réception, par l'unité centrale (22), des signaux d'indication d'actionnement et des informations relatives au mouvement spatial et/ou au positionnement spatial de la cuillère doseuse (10), et le comptage, en prenant collectivement en compte celles-ci, des portions distribuées, permettant l'obtention d'une valeur de comptage qui est stockée temporairement dans l'unité centrale (22), et
- la communication, par application du dispositif de communication de données (23), de la valeur de comptage à l'unité de collecte de données (30) via le canal de communication.

11. Procédé selon la revendication 10, **caractérisé par** l'incrémentation de la valeur de comptage lors de la réception d'un signal d'indication d'actionnement uniquement si au moins l'une des conditions suivantes est remplie :
- un événement de prélèvement de portion est identifié par rapport à une portion pas encore comptabilisée sur la base des informations fournies par le capteur (24) par rapport au mouvement spatial et/ou au positionnement spatial de la cuillère doseuse (10) avant la réception du signal d'indication d'actionnement,
- un état de cuillère doseuse déposant une portion est identifié, sur la base des informations fournies par le capteur (24) par rapport au mouvement spatial et/ou au positionnement spatial de la cuillère doseuse (10), à la réception du signal d'indication d'actionnement,
- un temps écoulé depuis le dernier signal d'indication d'actionnement dépasse un seuil de durée prédéterminé.

12. Procédé selon la revendication 11, **caractérisé en ce que** les conditions d'identification d'un événement de prélèvement de portion comprennent le fait que la partie de prélèvement (11) est orientée au moins partiellement vers le haut, et/ou qu'un axe longitudinal du manche (12) s'étend selon un angle par rapport à une direction verticale qui est inférieur à un angle limite choisi entre 0° et 45°.

13. Procédé selon la revendication 11 ou 12, **caractérisé en ce que** les conditions d'identification d'un état de cuillère doseuse déposant une portion comprennent le fait que la partie de prélèvement (11) est orientée au moins partiellement vers le bas, et/ou qu'un axe longitudinal du manche (12) s'étend selon un angle par rapport à une direction horizontale qui est inférieur à un angle limite choisi entre 0° et 45°.

14. Procédé selon l'une des revendications 11 à 13, **caractérisé en ce que** les conditions d'identification d'un état de cuillère doseuse déposant une portion comprennent en outre le fait qu'une dynamique de mouvement de la cuillère doseuse (10) est sous un seuil de dynamique de mouvement prédéterminé.

15. Procédé selon la revendication 14, **caractérisé en ce que** le seuil de durée appliqué dans le cas où la dynamique de mouvement détectée entre le signal d'indication d'actionnement et le précédent signal d'indication d'actionnement est inférieure au seuil de dynamique de mouvement prédéterminé est plus long que le seuil appliqué dans le cas où la dynamique de mouvement détectée entre les deux signaux est supérieure au seuil de dynamique de mouvement prédéterminé.

16. Procédé selon l'une des revendications 10 à 15, **caractérisé par** le passage de la cuillère doseuse (10) de l'état d'actionnement normal à un état de veille après détection, par le capteur (24), que la dynamique de mouvement est inférieure à un seuil de dynamique de mouvement prédéterminé sur un intervalle de temps, et le retour de la cuillère doseuse (10) de l'état de veille à l'état d'actionnement normal en cas de détection d'une dynamique de mouvement supérieure au seuil de dynamique de mouvement.

17. Procédé selon l'une des revendications 10 à 16, **caractérisé en ce que** la valeur de comptage est communiquée à l'unité de collecte de données (30) par l'intermédiaire du dispositif de communication de données (23) de la cuillère doseuse (10) après avoir détecté que la dynamique de mouvement de la cuillère doseuse (10) est tombée au-dessous d'un seuil de dynamique de mouvement prédéterminé.
